# EUROPÄISCHE PATENTANMELDUNG

(11) **EP 4 059 841 A1**
(43) Veröffentlichungstag der Anmeldung: **21.09.2022**
(21) Anmeldenummer: 21163368.0
(22) Anmeldetag: 18.03.2021
(51) Int. Cl.: B64C 39/02, B60L 53/10

(54) **FLUGDROHNE, BASISSTATION, FLUGSYSTEM UND VERFAHREN ZUM ELEKTRISCHEN LADEN EINER FLUGDROHNE**

(71) Anmelder: Siemens Aktiengesellschaft, 80333 München (DE)
(72) Erfinder: Breitkopf, Florian, 80539 München (DE); Bretschneider Chillon, Carlos, 81929 München (DE); Cramer, Dieter, 81543 München (DE); Freudenberg, Oliver, 83547 Babensham (DE); Wachl, Michael, 80801 München (DE)

(57) **Zusammenfassung**

Es wird eine Flugdrohne (100) angegeben, die dazu ausgelegt ist, auf einer Basisstation (200) zu landen und von dieser aufgeladen zu werden,
- wobei die Flugdrohne (100) eine elektrische Antriebsvorrichtung (110) und einen Akkumulator (120) zur Versorgung der Antriebsvorrichtung (110) mit elektrischer Energie aufweist,
- und wobei die Flugdrohne (100) ein Landegestell mit einer Mehrzahl von Standfüßen (130) aufweist, wobei wenigstens zwei der Standfüße (130) jeweils eine untenliegende Kontaktelektrode (140) aufweisen,
die dazu ausgelegt ist, bei der Landung auf einer Landefläche (210) der Basisstation (200) mit dort vorliegenden Elektrodenflächen (220) in elektrischen Kontakt zu treten. Weiterhin werden eine Basisstation (200) für eine solche Flugdrohne (100) sowie ein Flugsystem (1) und ein Verfahren zum Laden einer Flugdrohne (100) angegeben.

## Beschreibung

Die vorliegende Erfindung betrifft eine Flugdrohne, die dazu ausgelegt ist, auf einer Basisstation zu landen und von dieser aufgeladen zu werden, wobei die Flugdrohne eine elektrische Antriebsvorrichtung und einen Akkumulator zur Versorgung der Antriebsvorrichtung mit elektrischer Energie aufweist. Weiterhin betrifft die Erfindung eine Basisstation für eine solche Flugdrohne sowie ein Flugsystem mit Flugdrohne und Basisstation und ein Verfahren zum elektrischen Laden des Akkumulators einer Flugdrohne.

Flugdrohnen sind unbemannte Luftfahrzeuge, welche entweder autonom (z.B. durch einen Computer oder Mikrocontroller gesteuert) oder auch durch einen menschlichen Benutzer ferngesteuert fliegen können. Aus dem Stand der Technik sind zahlreiche unterschiedliche Arten von Flugdrohnen bekannt, welche sowohl im Freizeitbereich als auch z.B. für professionelle Transport- oder Überwachungsaufgaben eingesetzt werden. Vor allem im Bereich kleinerer und leichterer Flugdrohnen hat sich der Quadrocopter als wichtigste Bauform durchgesetzt, aber es kommen generell auch andere Typen zum Einsatz.

Eine Flugdrohne weist typischerweise eine elektrische Antriebsvorrichtung auf, welche durch einen mitfliegenden Akkumulator mit elektrischer Energie versorgt wird. Ein solcher Akkumulator kann zum Aufladen ausgebaut bzw. nach Entladung gegen einen frisch aufgeladenen Akkumulator getauscht werden. Alternativ kann der Akkumulator aber auch fest in die Flugdrohne eingebaut sein und über eine externe Ladevorrichtung aufgeladen werden. Hierzu wird der Akkumulator typischerweise vom Benutzer über ein Ladekabel mit der Ladevorrichtung verbunden. Meist muss dazu ein Ladestecker in eine Ladebuchse eingesteckt werden. Ein Nachteil dieser Vorgehensweise ist, dass hier die Interaktion eines Nutzers notwendig ist und daher das Aufladen nicht vollständig autonom erfolgen kann. Gerade bei autonom flugfähigen Drohnen wäre ein autonomes Laden wünschenswert.

Eine alternative Möglichkeit zum Aufladen eines fest in der Flugdrohne eingebauten Akkumulators besteht darin, den Akkumulator über eine Ladestation induktiv zu laden. Hierzu ist in der Ladestation eine erste Induktionsspule vorgesehen und in der Flugdrohne ist eine zweite Induktionsspule vorgesehen. Bei ausreichender räumlicher Nähe der beiden Induktionsspulen kann ein Aufladen des Akkumulators mit elektrischer Energie der Ladestation erfolgen. Hierzu wird kein manuelles Einstecken eines Ladesteckers benötigt, und es ist auch keine extrem hohe Positioniergenauigkeit für die Anordnung der beiden Spulen erforderlich. Damit eignet sich diese Variante besonders gut, um einen autonomen Ladevorgang ohne die Interaktion eines menschlichen Benutzers zu ermöglichen. Die Flugdrohne kann den Bereich der Ladestation, der die erste Induktionsspule enthält, autonom anfliegen, und das Laden erfolgt kontaktlos, so dass der Ladevorgang auf einfache Weise autonom gestartet und beendet werden kann. Nachteilig bei dieser Variante ist aber, dass die in die Flugdrohne eingebaute zweite Induktionsspule zum Fluggewicht beiträgt.

Aufgabe der Erfindung ist es daher, eine Flugdrohne zur Verfügung zu stellen, welche die genannten Nachteile überwindet. Insbesondere soll eine Flugdrohne zur Verfügung gestellt werden, welche zum einfachen elektrischen Aufladen des Akkumulators ausgelegt ist. Insbesondere soll das elektrische Aufladen autonom möglich sein. Außerdem soll die Flugdrohne möglichst ein geringes Fluggewicht aufweisen. Eine weitere Aufgabe ist es, eine Basisstation für eine solche Flugdrohne anzugeben, welche mit der Flugdrohne zusammenwirken kann, um den Ladevorgang zu ermöglichen. Außerdem soll ein vollständiges Flugsystem mit Flugdrohne und Basisstation angegeben werden sowie ein Verfahren zum elektrischen Laden des Akkumulators einer Flugdrohne mit einer Basisstation.

Diese Aufgaben werden durch die in Anspruch 1 beschriebene Flugdrohne, die in Anspruch 6 beschriebene Basisstation, das in Anspruch 9 beschriebene Flugsystem und das in Anspruch 12 beschriebene Verfahren gelöst.

Die erfindungsgemäße Flugdrohne ist dazu ausgelegt, auf einer Basisstation zu landen und von dieser aufgeladen zu werden. Die Flugdrohne weist eine elektrische Antriebsvorrichtung auf und ferner einen Akkumulator zur Versorgung der Antriebsvorrichtung mit elektrischer Energie. Außerdem weist die Flugdrohne ein Landegestell mit einer Mehrzahl von Standfüßen auf, wobei wenigstens zwei der Standfüße jeweils eine untenliegende Kontaktelektrode aufweisen. Diese Kontaktelektroden sind dazu ausgelegt, bei der Landung auf einer Landefläche der Basisstation mit dort vorliegenden Elektrodenflächen in elektrischen Kontakt zu treten.

Bei der Flugdrohne soll es sich allgemein um ein unbemanntes Luftfahrzeug handeln, wobei die Gewichtsklasse zunächst beliebig ist, allerdings eine besonders niedrige Gewichtsklasse im Zusammenhang mit der Erfindung allgemein besonders bevorzugt ist. Die Flugdrohne kann prinzipiell entweder dazu ausgelegt sein, in einem ferngesteuerten Flugbetrieb zu arbeiten (also von einem menschlichen Benutzer gesteuert zu werden) oder auch autonom von einem Computer bzw. Mikrocontroller gesteuert zu werden. Bei einem solchen autonomen Betrieb kann der zur Steuerung verwendete Computer bzw. Microcontroller entweder im Bereich der Flugdrohne selbst und/oder im Bereich der Basisstation angeordnet sein oder auch in einem weiteren optionalen Steuerungssystem. Wesentlich ist bei dieser Variante nur, dass für die Steuerung kein menschlicher Benutzer notwendig ist. Die Funktionalität für eine autonome Ansteuerung kann auch auf mehrere Einheiten (z.B. die Flugdrohne und die Basisstation bzw. eine separate Steuereinheit) verteilt sein. Eine autonom ansteuerbare Flugdrohne ist (unabhängig vom Ort der Implementierung der Steuerungsfunktionalität) allgemein im Zusammenhang mit dieser Erfindung bevorzugt.

Der Kerngedanke der vorliegenden Erfindung besteht darin, dass die elektrische Verbindung zum Aufladen des mitfliegenden Akkumulators beim Landen der Flugdrohne auf einer Landefläche einer zugehörigen Basisstation automatisch hergestellt werden kann. Dies wird dadurch erreicht, dass zumindest zwei der im Landegestell vorhandenen Standfüße untenliegende Kontaktelektroden aufweisen. "Untenliegend" soll in diesem Zusammenhang bedeuten, dass in einer Landeposition der Flugdrohne die Kontaktelektroden im geodätisch untenliegenden Bereich der Standfüße liegen sind und auch nach unten orientiert sind - also mit anderen Worten zu der darunterliegenden Landefläche hin, auf der die Flugdrohne im gelandeten Zustand steht. Zwei solche untenliegenden Kontaktelektroden sind ausreichend, um bei der Landung automatisch eine elektrische Kontaktierung mit zugehörigen Elektrodenflächen der Basisstation zu bewirken und einen geschlossenen Stromkreis herzustellen, über den der eingebaute Akkumulator von einer Ladevorrichtung der Basisstation aus aufgeladen werden kann.

Ein wesentlicher Vorteil der erfindungsgemäßen Flugdrohne liegt darin, dass für die Herstellung dieses elektrischen Kontakts kein Einstecken eines Steckers in eine Buchse oder ein sonstiger Anschluss eines Ladekabels erforderlich ist. Vielmehr wird der für das Aufladen erforderliche elektrische Kontakt durch die Landung selbst hergestellt. Dadurch ist keine Interaktion eines menschlichen Benutzers erforderlich. Wenn die Landung der Flugdrohne von dem Flugsystem autonom durchgeführt werden kann, dann wird damit gleichzeitig die elektrische Verbindung des Ladestromkreises autonom hergestellt. In entsprechender Weise wird bei einem autonomen Flugstart der Drohne die Verbindung autonom unterbrochen.

Ein weiterer Vorteil der erfindungsgemäßen Flugdrohne liegt darin, dass für das Aufladen des Akkumulators keine mitfliegende Induktionsspule benötigt wird. Auf diese Weise wird erreicht, dass die fliegende Masse (also die Gesamtmasse der Flugdrohne selbst) vorteilhaft gering gehalten wird.

Die erfindungsgemäße Basisstation dient als Basisstation für eine erfindungsgemäße Flugdrohne (bzw. als Basisstation eines erfindungsgemäßen Flugsystems). Die Basisstation weist eine Landefläche für eine Flugdrohne auf und eine Ladevorrichtung zum Aufladen des Akkumulators der Flugdrohne. Die Landefläche ist in mehrere Felder unterteilt, wobei wenigstens zwei dieser Felder als elektrisch voneinander isolierte Elektrodenflächen ausgestaltet sind, die dazu vorgesehen sind, bei der Landung der Flugdrohne mit deren Kontaktelektroden in elektrischen Kontakt zu treten, um den Akkumulator aufzuladen.

Die beschriebene Landefläche ist insbesondere eine ebene Landefläche, auf der die Flugdrohne landen kann und von der aus sie starten kann. Die wenigstens zwei Elektrodenflächen bilden entsprechend ebene Teilflächen dieser übergeordneten ebenen Landefläche. Sie sind dazu ausgelegt, bei der Landung der Flugdrohne mit den wenigstens zwei Kontaktelektroden der Flugdrohne in Kontakt zu treten. Sie sind also insbesondere so angeordnet, dass sich bei einer Zentrierung und Ausrichtung der Drohne in einer vordefinierten Landeposition eine solche elektrische Kontaktierung automatisch ergibt. Die erfindungsgemäße Basisstation wirkt also mit der erfindungsgemäßen Flugdrohne zusammen, wobei die oben beschriebenen Vorteile erreicht werden.

Das erfindungsgemäße Flugsystem umfasst eine erfindungsgemäße Flugdrohne und eine erfindungsgemäße Basisstation. Auch die Vorteile des erfindungsgemäßen Flugsystems entsprechen den oben beschriebenen Vorteilen der erfindungsgemäßen Flugdrohne.

Das erfindungsgemäße Verfahren dient zum elektrischen Laden des Akkumulators einer erfindungsgemäßen Flugdrohne mittels einer erfindungsgemäßen Basisstation. Das Verfahren umfasst die folgenden Schritte:
a) Anfliegen der Basisstation mit der Flugdrohne,
b) Landen der Flugdrohne auf der Landefläche der Basisstation, wobei die Kontaktelektroden der Flugdrohne mit den zugeordneten Elektrodenflächen in elektrischen Kontakt treten und
c) Aufladen des Akkumulators der Flugdrohne mit der Ladevorrichtung der Basisstation.
So ermöglicht das erfindungsgemäße Verfahren die Realisierung der oben beschriebenen Vorteile in Bezug auf den konkreten Ladevorgang. So kann insbesondere ein autonom durchführbares Laden ermöglicht werden, wobei das Fluggewicht trotzdem vorteilhaft gering gehalten werden kann.

Vorteilhafte Ausgestaltungen und Weiterbildungen der Erfindung gehen aus den von den Ansprüchen 1, 6, 9 und 12 abhängigen Ansprüchen sowie der folgenden Beschreibung hervor. Dabei können die beschriebenen Ausgestaltungen der Flugdrohne, der Basisstation, des Flugsystems und des Ladeverfahrens allgemein vorteilhaft miteinander kombiniert werden.

Gemäß einer allgemein vorteilhaften Ausführungsform sind die Kontaktelektroden der Standfüße als Kontaktstifte ausgebildet, besonders vorteilhaft als Federkontaktstifte. Die Kontaktstifte sind insbesondere in ihren (den Elektrodenflächen zugewandten) Endbereichen so dünn, dass sich eine im Vergleich zu der jeweiligen Elektrodenfläche sehr kleine und insbesondere nahezu punktförmige Auflagefläche ergibt. Hierzu können sich die Kontaktstifte in ihren Endbereichen verjüngen. Vorteilhaft ist es in jedem Fall, wenn sie in ihren Endbereichen abgerundet sind. Alternativ können sie auch als spitze Nadeln oder kronenartig geformt sein. Eine abgerundete Form bringt jedoch den Vorteil mit sich, dass sich die Kontaktstifte beim Landen auf raueren Oberflächen weniger leicht verhaken.

Durch die geringe Auflagefläche der Kontaktstifte auf der jeweiligen Elektrodenfläche ist der elektrische Kontaktbereich sehr klein. Der Kontakt ist jedoch trotzdem zur Ausbildung des Ladestromkreises ausreichend. Ein wesentlicher Vorteil der geringen Auflagefläche der Kontaktstifte ist, dass ein Kontaktstift nie zwei Elektrodenflächen gleichzeitig berühren kann, insbesondere wenn die Auflagefläche der Kontaktstifte wesentlich kleiner ist als ein Spalt zwischen den einzelnen Elektrodenflächen.

Die Kontaktstifte können vorteilhaft aus einem metallischen Material gebildet sein, beispielsweise mit einem Grundkörper aus einer Kupferlegierung oder einem Stahl, welcher optional mit einer Beschichtung z.B. aus Gold, Silber, Nickel oder Rhodium versehen sein kann. Wenn die Kontaktstifte als Federkontaktstifte ausgestaltet sind, können diese in an sich bekannter Weise eine Stifthülse, eine Druckfeder und einen Kolben umfassen, wobei die oben genannten vorteilhaften Materialien ebenfalls zum Einsatz kommen können. Die Ausgestaltung als Federkontaktstift bewirkt den Vorteil, dass gegebenenfalls Unebenheiten zwischen den einzelnen Standfüßen ausgeglichen werden können. Außerdem können Federkraft und Federweg in Abhängigkeit von der Masse der Flugdrohne so dimensioniert werden, dass der Aufprall der Flugdrohne auf die Landefläche beim Landen durch das Einfedern gedämpft wird. Mit anderen Worten können die Federkontaktstifte als Stoßdämpfer für die Landung wirken und dabei insbesondere so dimensioniert sein, dass eine Landung mit einmaligem Aufsetzen (also ohne erneutes Hochspringen) ermöglicht wird.

Gemäß einer besonders bevorzugten Ausführungsform können alle der vorliegenden Standfüße des Landegestells als untenliegende Kontaktelektroden ausgebildet sein. Insbesondere können dann alle Standfüße als Kontaktstifte ausgebildet sein. Bei der Ausgestaltung als Federkontaktstifte können sie sogar den wesentlichen funktionalen Teil des Landegestells ausbilden, indem sie wie oben beschrieben eine Dämpfung und einen Höhenausgleich bei der Landung bewirken. Das Landegestell kann dabei n Landefüße aufweisen, wobei n insbesondere 3, 4, 6 oder 8 sein kann.

Allgemein vorteilhaft ist die Flugdrohne zum senkrechten Starten und Landen auf/von der Landefläche ausgelegt. Dazu kann die Flugdrohne beispielsweise als Multicopter oder als Helikopter ausgestaltet sein. Allgemein ist im Hinblick auf eine hohe Flugstabilität die Ausgestaltung als Multicopter besonders bevorzugt. Besonders vorteilhaft kann die Flugdrohne als Quadrocopter ausgestaltet sein. Alternativ kann sie aber auch ein Hexacopter, Octocopter, Bicopter oder Tricopter sein. Vor allem mit den höheren Rotorzahlen von 4, 6 oder 8 werden besonders stabile Fluglagen erreicht, und bei Rotorzahlen von 6 oder mehr kann auch eine gewisse Ausfallsicherheit in Bezug auf den Ausfall eines Rotors erreicht werden. Bei niedrigeren Rotorzahlen ist allerdings das Fluggewicht typischerweise geringer, so dass insgesamt der Quadrocopter besonders zweckmäßig ist.

Allgemein und unabhängig von der genauen konstruktiven Ausgestaltung kann die Flugdrohne vorteilhaft eine Gesamtmasse unterhalb von 250 g aufweisen. Besonders bevorzugt kann die Gesamtmasse sogar bei höchstens 200 g, insbesondere sogar höchstens 150 g liegen. Bei derart leichten Flugdrohnen ist die Regulierung weniger streng, und es liegen geringere gesetzliche Anforderungen in Bezug auf eine Registrierung bzw. Zulassung oder Betriebserlaubnis vor.

Bei der Ausführung als Multicopter kann die Flugdrohne einen zentralen Drohnenkörper und eine Mehrzahl r von Rotoren aufweisen, die mit einer entsprechenden Anzahl r von Tragarmen an dem Drohnenkörper befestigt sind. Auch die Gesamtzahl der im Landegestell vorhandenen Standfüße kann dann insbesondere dieselbe Zahl r sein. So kann jedem Rotor ein Standfuß zugeordnet sein, welcher sich insbesondere vom außenliegenden Ende des jeweiligen Tragarms nach unten erstreckt. Auf diese Weise ist das Grundgerüst der Flugdrohne im Wesentlichen durch den Drohnenkörper, die Tragarme und die Standfüße gebildet, und es ist insbesondere kein zusätzliches Landegestell nötig. An oder in dem jeweiligen Tragarm kann dann zweckmäßig eine elektrische Leitung verlaufen, durch die die zugehörige Kontaktelektrode mit dem Akkumulator verbunden ist. Allgemein vorteilhaft ist der Akkumulator im Zentrum der Flugdrohne, also hier insbesondere innerhalb des Drohnenkörpers angeordnet. Grundsätzlich kann es sich dabei entweder um eine einzelne Akkumulatorzelle oder um eine Mehrzahl von Ackumulatorzellen handeln (ein sogenanntes Akkupack). Innerhalb des zentralen Drohnenkörpers können optional auch ein oder mehrere Mikroprozessoren angeordnet sein, mit welchen eine Steuerung der Flugdrohne realisiert werden kann. So kann beispielsweise ein erster Mikroprozessor zur Lageregelung der Flugdrohne vorgesehen sein. Eine solche Lageregelung ist auch dann zweckmäßig, wenn die Flugdrohne von einem Benutzer ferngesteuert wird. Bei der autonom flugfähigen Ausführungsform kann insbesondere noch wenigstens ein weiterer Mikroprozessor vorliegen, mit welchem die autonome Steuerung der Flugdrohne anhand von vordefinierten Flugaufgaben durchgeführt wird.

So kann die Flugdrohne ganz allgemein und unabhängig von der genauen Bauform zur autonomen Durchführung von Flügen ausgestaltet sein. Insbesondere kann sie zur Durchführung von Flügen in Innenräumen ausgelegt sein. Sie kann insbesondere ausschließlich zur Benutzung in Innenräumen vorgesehen sein und muss daher keine outdoor-fähige wasserdichte Kapselung aufweisen. Auch bei einer Innenraumdrohne kann es jedoch vorteilhaft sein, wenn zumindest der zentrale Drohnenkörper von einem Gehäuse umgeben ist, um eine Schädigung durch eine mechanische Einwirkung von außen zu vermeiden (z.B. bei einem Zusammenstoß mit einem Gegenstand oder einem Menschen). Dieses Gehäuse kann jedoch ohne eine wasserdichte Kapselung wesentlich leichter ausgestaltet werden als bei einer Flugdrohne für Außenanwendungen. Auch die Rotoren können optional mit zugehörigen Schutzelementen versehen sein, beispielsweise mit außenliegenden Kreissegmenten (sogenannten Prop Guards) oder Käfigen, die ebenfalls vor einer Schädigung bei einem Zusammenstoß mit einem anderen Objekt schützen.

Gemäß einer allgemein vorteilhaften Ausführungsform der Basisstation sind die einzelnen Elektrodenflächen zumindest mehrere Quadratzentimeter groß, beispielsweise wenigstens 10 cm², besonders vorteilhaft wenigstens 25 cm² oder sogar wenigstens 100 cm². Bei einer derart großflächigen Ausgestaltung der Elektrodenflächen ist keine besonders präzise Positionierung der Flugdrohne auf der Landefläche nötig, damit die Kontaktelektroden der Flugdrohne mit den jeweils zugeordneten Elektrodenflächen elektrisch leitend in Berührung treten. Dabei ist allgemein keine feste Zuordnung zwischen einer gegebenen Kontaktelektrode und einer bestimmten Elektrodenfläche nötig. Es ist vielmehr ausreichend, wenn sich diese Zuordnung erst beim Landeanflug der Flugdrohne in Abhängigkeit von ihrer konkreten Orientierung bei der Landung ergibt. Ein weiterer Vorteil der vergleichsweise groß dimensionierten Elektrodenflächen liegt darin, dass eine gegebene Basisstation mit unterschiedlichen Typen von Flugdrohnen, insbesondere auch mit unterschiedlicher Größe und unterschiedlichem Abstand der Kontaktelektroden in den Standfüßen kompatibel sein kann.

Weiterhin ist es bevorzugt, wenn alle Felder, in die die Landefläche unterteilt ist, als Elektrodenflächen ausgestaltet sind. Insbesondere ist dann der wesentliche Teil der gesamten Landefläche durch diese Elektrodenflächen gebildet, es liegen also nur schmale Spalte zwischen diesen Elektrodenfeldern vor. Zweckmäßig ist es, wenn diese Spalte etwas größer als die Auflageflächen der Kontaktelektroden der Standfüße sind, damit eine gleichzeitige Berührung zweier Elektrodenflächen vermieden wird. Nur bei einer extremen Fehl-Positionierung der Flugdrohne auf der Landefläche kann es dann passieren, dass ein oder mehrere Kontaktelektroden in den Spalten zwischen den Elektrodenflächen landen. In solch einem Fall muss eine erneute Positionierung der Flugdrohne auf der Landefläche erfolgen. Die Anordnung ist jedoch aufgrund der flächigen Elektroden der Landefläche äußerst tolerant gegenüber geringeren Fehlpositionierungen der Flugdrohne - sowohl was die Position des Zentrums als auch die Winkelausrichtung der Standfüße betrifft. Die einzelnen Elektrodenflächen können im Bereich ihrer außenliegenden Oberfläche vorteilhaft aus einem metallischen Material gebildet sein, beispielsweise aus einer Kupferlegierung oder auch mit einer Oberflächen-Beschichtung aus Gold oder Silber. So wird auch bei einer vergleichsweise kleinen Auflagefläche der Kontaktelektroden ein guter elektrischer Kontakt erreicht.

Besonders vorteilhaft ist die Unterteilung der Landefläche in einzelne Felder symmetrisch zum Zentrum der Landefläche ausgestaltet. Besonders vorteilhaft liegt zumindest eine Punktsymmetrie bezüglich des Zentrums der Landefläche vor. Weiterhin ist es vorteilhaft, wenn die einzelnen Felder (vom Zentrum aus gesehen) gleich große Winkelsegmente der Gesamtfläche ausbilden. So kann beispielsweise eine Landefläche in vier 90°-Segmente oder in sechs 60°-Segmente oder in acht 45°-Segmente unterteilt sein. Die Grundform der Landefläche kann dabei beispielsweise rechteckig oder hexagonal oder oktagonal oder allgemein auch kreisförmig oder oval oder auch in anderer Weise ausgestaltet sein. Der wesentliche Vorteil einer zentrosymmetrischen Ausgestaltung der Landefläche ist jedenfalls, dass bei einer Positionierung des Zentrums der Flugdrohne über dem Zentrum der Landefläche ein großer Bereich von Winkel-Ausrichtungen möglich ist, bei denen jeweils alle zueinander gehörenden Elektrodenpaare (aus Elektrodenfläche und Kontaktelektrode) in elektrisch leitenden Kontakt miteinander treten. Auch eine leichte Abweichung von der optimalen Zentrierung von Flugdrohne und Landefläche kann dabei toleriert werden.

Gemäß einer vorteilhaften Ausführungsform kann die Flugdrohne bzw. das Flugsystem als Ganzes zur Durchführung von Überwachungsaufgaben vorgesehen sein, insbesondere für Überwachungsaufgaben in geschlossenen Räumen. Dabei kann es sich beispielsweise um Überwachungsaufgaben für industrielle Fertigungsanlagen handeln. Alternativ kann die Flugdrohne aber auch zur Überwachung in anderen Arten von Räumen, beispielsweise in Bürogebäuden, Kliniken, Labors oder ähnlichem ausgestaltet sein.

Gemäß einer allgemein vorteilhaften Ausführungsform des Flugsystems sind Flugdrohne und Basisstation so zueinander passend ausgestaltet, dass die Kontaktelektroden der Flugdrohne in einer vorbestimmten Landeposition mit den Elektrodenflächen der Basisstation in Kontakt treten. Die vorbestimmte Ladeposition ist dabei insbesondere eine Position, bei der die Drohne im Wesentlichen bezüglich des Zentrums der Landefläche zentriert ist. Um diese Anpassung zu erreichen, ist zweckmäßig die Anzahl n der Kontaktelektroden der Flugdrohne identisch mit der Anzahl der Elektrodenflächen der Basisstation. Dabei kann n vorteilhaft wenigstens 4 und insbesondere genau 4 sein. Die Zahl n ist besonders vorteilhaft gleich der Anzahl r der Rotoren in einer als Multicopter ausgestalteten Flugdrohne. Prinzipiell werden zum elektrischen Laden des Ackumulators nur zwei elektrische Kontakte zwischen der Flugdrohne und der Basisstation benötigt. Allerdings können höhere Werte von n = 4 oder mehr vorteilhaft sein, weil damit eine Redundanz und damit eine Ausfallsicherheit bezüglich der Kontaktierung erreich wird. Zum anderen ist es vorteilhaft, wenn die Anzahl n der gebildeten Kontakte der Grundsymmetrie des Systems entspricht, da dann die oben beschriebenen Vorteile bezüglich der Toleranz der Positionierung erreicht werden können.

Allgemein kann das gesamte Flugsystem portabel ausgestaltet sein. Mit anderen Worten bildet also die Basisstation zusammen mit der Flugdrohne ein portables System. Hierzu kann die Basisstation beispielsweise in einen Koffer integriert sein oder als Koffer ausgestaltet sein. Es kann sich beispielsweise um einen Koffer mit zwei Halbschalen handeln, wobei die Landefläche z.B. in eine der Halbschalen integriert ist. Wenn der Koffer aufgeklappt auf dem Boden liegt, ist die Landefläche in einem horizontalen, betriebsbereiten Zustand. Allgemein kann die portable Basisstation eine elektrische Energieversorgung aufweisen, beispielsweise kann dort ebenfalls ein Akkumulator integriert sein. Alternativ oder zusätzlich ist aber auch eine Energieversorgung der Basisstation durch ein Stromnetz möglich. Die portable Basisstation kann auch ihrerseits auf einem fahrerlosen Transportfahrzeug angeordnet sein (einem sogenannten AGV für englisch "automated guided vehicle"). Wenn die Basisstation sozusagen huckepack von einem solchen AGV getragen wird, kann sie beispielsweise autonom näher an eine im Einsatz befindliche Flugdrohne heranfahren. Das ist vor allem dann vorteilhaft, wenn die Flugdrohne sich bereits nahe am Ende der Laufzeit ihres Akkumulators befindet.

Gemäß einer vorteilhaften Variante des Flugsystems kann dieses nicht nur eine, sondern mehrere Flugdrohnen umfassen. Alternativ oder zusätzlich kann das Flugsystem auch mehrere Basisstationen umfassen. Die einzelnen Flugdrohnen und/oder Basisstationen können untereinander verschieden und insbesondere verschieden groß ausgestaltet sein. Bei untereinander gleicher grundlegender Symmetrie (insbesondere gleichem n), kann nämlich eine erfindungsgemäße Basisstation zu Flugdrohnen unterschiedlicher kompatibel Größe sein, und umgekehrt. Diese hohe Flexibilität in der Anpassung ermöglicht es, größere Systeme von mehreren Teilelementen autonom zu betreiben und so insbesondere ein größeres autonomes Überwachungssystem aufzubauen und zu betreiben.

Gemäß einer ersten bevorzugten Ausführungsform für die autonome Positionierung kann die Basisstation eine Kamera und optional eine Steuervorrichtung aufweisen, mit welcher die Flugdrohne automatisiert erkannt werden kann. Alternativ oder zusätzlich kann die Flugdrohne eine Kamera und optional eine Steuervorrichtung aufweisen, mit welcher die Basisstation automatisiert erkannt werden kann. Unabhängig von dem jeweiligen Ort von Kamera und Steuervorrichtung kann die jeweilige Steuervorrichtung dazu ausgebildet sein, Anweisungen an die Antriebsvorrichtung der Flugdrohne zu übermitteln, mit denen die Flugdrohne über der Basisstation autonom zentriert werden kann und ggf. auch bezüglich einer Winkelposition ausgerichtet werden kann.

Bevorzugt ist dabei allgemein die erste Variante, bei der die Kamera und die Steuervorrichtung in die Basisstation integriert sind. Bei dieser Variante kann die Basisstation mittels Bewegungs- und Objekterkennung feststellen, wenn eine Flugdrohne über ihr im Landeanflug ist. Mit der Kamera kann dann in einem nächsten Schritt der ungefähre optische Schwerpunkt (und damit das Zentrum) der Flugdrohne zum jeweiligen Zeitpunkt bestimmt werden. Aus dem aktuellen optischen Schwerpunkt kann eine Abweichung zum Zentrum der Basisstation und damit der vorbestimmten Landeposition bestimmt werden. Diese Abweichung kann von der Steuervorrichtung der Basisstation in Form von Differenzkoordinaten an die Flugdrohne übermittelt werden. Aus diesen Differenzkoordinaten wird eine Fluganweisung für die Antriebsvorrichtung generiert, mit der eine verbesserte Zentrierung der Flugdrohne über der Landefläche erreicht wird. Durch eine iterative Anwendung des beschriebenen Vorgehens kann eine Zentrierung mit einer Genauigkeit von wenigen Zentimetern erreicht werden, was im Zusammenhang mit der oben beschriebenen Positionstoleranz des Systems ausreicht, um beim Landen eine autonome Kontaktierung für das Aufladen zu bewirken. Die Positioniergenauigkeit kann beispielsweise einen Toleranzbereich von bis zu +/- 2 cm oder sogar bis zu +/- 5 cm aufweisen. Wenn die lateralen Abmessungen der Elektrodenflächen größer sind als diese laterale Positioniergenauigkeit, kann trotzdem eine zuverlässige Kontaktierung zwischen den Kontaktelektroden und den zugehörigen Elektrodenflächen erreicht werden.

Gemäß einer allgemein bevorzugten Ausführungsform des Verfahrens werden alle beschriebenen Schritte a) bis c) von dem Flugsystem autonom durchgeführt, also ohne Einwirkung eines menschlichen Benutzers. Optional kann im Anschluss an Schritt c) als zusätzlicher Schritt d) ein erneutes Starten der Flugdrohne von der Landefläche erfolgen. Auch dies erfolgt vorteilhaft autonom.

Im Rahmen des Verfahrens ist es zweckmäßig, wenn zwischen den Schritten b) und c) das Antriebssystem der Flugdrohne ausgeschaltet wird. Dies kann ebenfalls autonom erfolgen, entweder durch die Flugdrohne selbst nach einem vorgegebenen Zeitintervall nach der Landung der Flugdrohne oder durch einen Ausschaltpuls von der Basisstation getriggert. In entsprechender Weise kann das Antriebssystem zwischen den Schritten c) und d) z.B. durch einen Einschaltpuls wieder eingeschaltet werden.

Allgemein vorteilhaft kann vor oder während Schritt b) eine autonome Zentrierung der Flugdrohne über dem Zentrum der Landefläche erfolgen. Dies kann insbesondere in der letzten Phase des Landeanflugs, bevorzugt iterativ, erfolgen. Diese autonome Zentrierung kann insbesondere über eine Kamera in der Flugdrohne und/oder der Basisstation und wenigstens eine zugehörige Steuereinheit erreicht werden, wie weiter oben bereits im Zusammenhang mit dem Flugsystem beschrieben.

Optional kann die Basisstation eine zentrale Steuereinheit aufweisen, insbesondere einen Prozessor bzw. einen Computer. Es kann sich also mit anderen Worten um eine intelligente Basisstation mit einer Kommandozentrale handeln. Mit dieser zentralen Steuereinheit können weitere Verfahrensschritte durchgeführt werden, insbesondere ein oder mehrere der folgenden zusätzlichen Schritte:
- Überwachung des Ladevorgangs in Bezug auf den Ladefortschritt, Überprüfung des Betriebszustands der Flugdrohne mittels einer Testroutine,
- Übertragung von Flugaufgaben auf die Flugdrohne sowie
- Übertragung von Daten von der Flugdrohne auf die Basisstation.
Dabei kann allgemein die zentrale Datenverarbeitung und insbesondere die Auswertung der Flugdaten innerhalb der Basisstation selbst und/oder in einem weiteren Computersystem erfolgen. Bei dem weiteren Computersystem kann es sich um ein verteiltes, dezentrales Computersystem handeln, also mit anderen Worten um ein cloud-basiertes System.

Nachfolgend wird die Erfindung anhand von bevorzugten Ausführungsbeispielen unter Bezugnahme auf die angehängten Zeichnungen beschrieben, in denen:
- Figur 1: eine schematische perspektivische Darstellung eines Flugsystems nach einem Beispiel der Erfindung zeigt,
- Figur 2: eine schematische Schnittdarstellung eines Federkontaktstifts in einem solchen Flugsystem zeigt und
- Figur 3: eine schematische Aufsicht einer Basisstation nach einem weiteren Beispiel der Erfindung zeigt.

In den Figuren sind gleiche oder funktionsgleiche Elemente mit gleichen Bezugszeichen versehen.

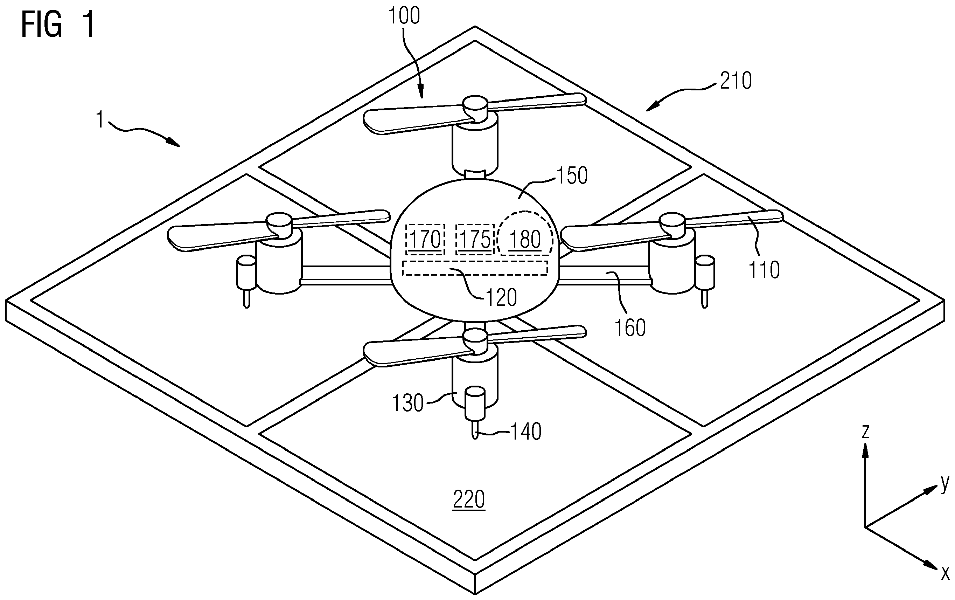

In Figur 1 ist eine schematische perspektivische Darstellung eines Flugsystems 1 nach einem Ausführungsbeispiel der Erfindung gezeigt. Das Flugsystem 1 umfasst eine Flugdrohne 100 und eine dazu gehörige Basisstation 200. Es können aber auch mehrere solche Flugdrohnen 100 bzw. Basissysteme 200 umfasst sein. Figur 1 zeigt einen Systemzustand, bei dem die Flugdrohne 100 auf einer Landefläche 210 der Basisstation 200 gelandet ist. Diese Landefläche 210 ist eine ebene Fläche zum Starten und Landen der Flugdrohne. Sie ist im vorliegenden Beispiel in vier gleichartige Quadranten unterteilt, die jeweils ein Feld der Landefläche ausbilden. Diese einzelnen Felder 220 sind jeweils als Elektrodenfläche ausgebildet, beispielsweise mit dem Basismaterial Kupfer mit einer Oberflächenbeschichtung aus Gold.

Die Flugdrohne 100 ist in diesem Beispiel als Quadrocopter ausgebildet. Sie ist mit einer elektrischen Antriebsvorrichtung ausgestattet, welche hier durch die vier Rotoren 110 repräsentiert ist. Die elektrischen Antriebsmotoren dieser vier Rotoren 110 werden durch einen Akkumulator 120 mit elektrischer Energie versorgt. Der Akkumulator 120 ist hier im Zentrum der Flugdrohne 100 innerhalb eines zentralen Drohnenkörpers 150 angeordnet. Von dem zentralen Drohnenkörper aus erstrecken sich vier Tragarme 160 nach lateral außen (also in x- bzw. y-Richtung vom Zentrum der Flugdrohne weg). Die zu den Tragarmen 160 senkrecht stehende z-Achse entspricht der vertikalen Raumrichtung. Es handelt sich in diesem Beispiel bei dem Multicopter um eine im Wesentlichen senkrecht (in z-Richtung) startende und landende Flugdrohne.

In ihren (bezüglich der z-Achse) radial außenliegenden Bereichen sind die vier Tragarme 160 jeweils mit einem Standfuß 130 versehen, welcher jeweils unterhalb des zugeordneten Rotors 110 sitzt. Diese vier Standfüße bilden zusammen das Landegestell der Flugdrohne. Bei einer Landung auf der Landefläche 210 oder auf einer anderen ebenen Fläche kommt die Flugdrohne auf diesen vier Standfüßen 130 zum Stehen. In ihrem untenliegenden Bereich weist jeder dieser vier Standfüße 130 eine Kontaktelektrode 140 auf. In diesem Beispiel sind die vier Kontaktelektroden 140 als Federkontaktstifte ausgebildet. Die einzelnen Kontaktelektroden sind über hier nicht gezeigte Verbindungsleitungen in oder an den jeweiligen Standfüßen und Tragarmen mit dem zentralen Akkumulator 120 elektrisch verbunden.

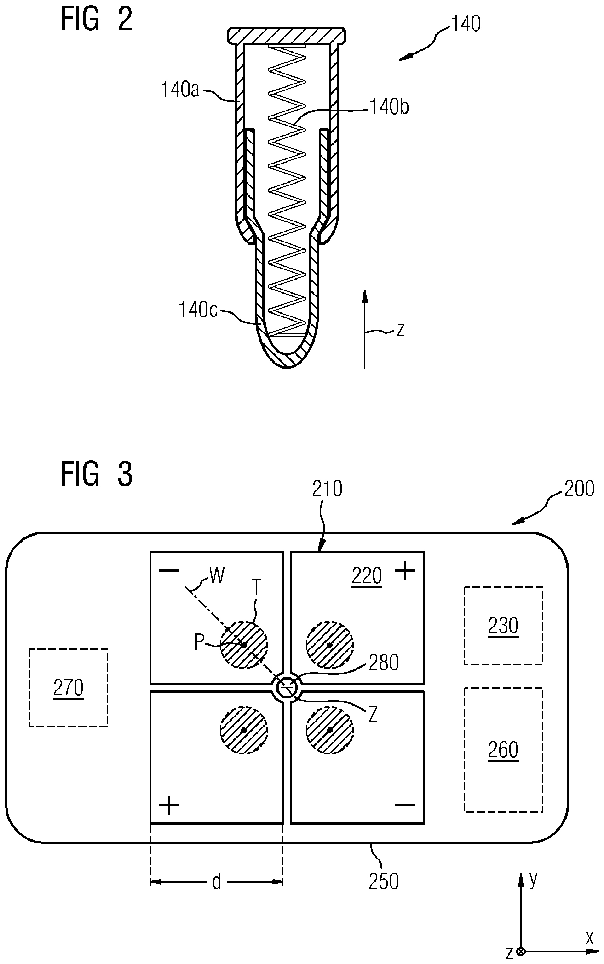

In Figur 2 ist eine Teilansicht eines solchen Federkontaktstifts 140 in schematischer Schnittdarstellung gezeigt. Gezeigt ist ein Längsschnitt durch einen Federkontaktstift 140, welcher eine außenliegende Stifthülse 140a, eine innenliegende Feder 140b und einen nach unten (und damit zur Landefläche 210 hin) weisenden Kolben 140c aufweist. Der Kolben 140c ist dabei radial innerhalb der Stifthülse 140a geführt. Der Kolben 140c ist innerhalb der Stifthülse 140a in z-Richtung beweglich angeordnet, wobei diese Relativbewegung durch die Feder 140b abgefedert und damit auch gedämpft ist. Alle drei wesentlichen Komponenten, insbesondere der Kolben 140c und die Stifthülse 140a, sind aus elektrisch leitfähigem Material gebildet. Über den Endbereich des Kolbens 140c wird bei einer Landung der Flugdrohne 100 auf der Landefläche 210 ein elektrischer Kontakt zu der jeweils zugeordneten Elektrodenfläche 220 hergestellt, auf dem der jeweilige Federkontaktstift zum Stehen kommt. Beim Beispiel der Figur 1 wird auf diese Weise zwischen jedem der vier Federkontaktstifte ein Kontakt zu einer zugeordneten Elektrodenfläche 220 hergestellt. Ausreichend für das Funktionieren der Erfindung wäre es aber prinzipiell, wenn nur zwei solche elektrischen Kontakte zwischen Kontaktelektroden der Flugdrohne und Elektrodenflächen der Landefläche hergestellt würden. Wesentlich ist, dass durch Herstellung von wenigstens zwei solchen elektrischen Verbindungen ein Stromkreis zwischen dem Akkumulator 120 der Flugdrohne und einer hier nicht näher dargestellten Ladevorrichtung der Basisstation geschlossen werden kann. Nach Herstellung dieser Verbindung kann das Aufladen des Akkumulators von der Basisstation 200 aus eingeleitet werden.

Beim Beispiel der Figur 2 ist der Endbereich des Kolbens 140c abgerundet ausgestaltet. Hier sind prinzipiell aber auch andere Formen möglich. Der durch die innenliegende Feder 140b bedingte Federweg kann vorteilhaft dazu beitragen, bei der Landung der Flugdrohne Unebenheiten zwischen den vier Standfüßen 130 auszugleichen. Die Federkraft kann so gewählt werden, dass die Federkontaktstifte 140 gleichzeitig aus als Stoßdämpfer wirken, indem sie den Aufprall bei der Landung abfedern. Idealerweise setzt die Flugdrohne bei einem langsamen Landeanflug sanft auf und springt nicht noch einmal von der Landefläche 210 nach oben zurück.

Die Flugdrohne 100 weist beim Beispiel der Figur 1 innerhalb ihres zentralen Drohnenkörpers 150 neben dem Akkumulator 120 auch noch zwei Mikroprozessoren 170, 175 und eine Kamera 180 und weitere optionale Elemente auf. Der erste Mikroprozessor 170 ist beispielsweise zur Lageregelung vorgesehen. Der zweite Mikroprozessor 175 ist beispielsweise dazu vorgesehen, eine autonome Steuerung der Flugdrohne zu realisieren. Diese Flugdrohne ist also autonom flugfähig und kann beispielsweise für Überwachungsaufgaben im Innenraumbereich, insbesondere in einer industriellen Fertigungsanlage, eingesetzt werden. Mit dem zweiten Mikroprozessor 175 kann optional auch eine Kamera 180 der Flugdrohne angesteuert und ausgelesen werden. Mit dieser Kamera 180 kann die Flugdrohne 100 autonom visuelle Daten über ihre Umgebung sammeln und mit diesen ihr eigenes Flugverhalten steuern bzw. optimieren. Falls eine solche Kamera 180 auch nach unten ausgerichtet werden kann, dann kann diese Kamera in Verbindung mit einer Bilderkennung durch den Mikroprozessor 175 dazu verwendet werden, die Flugdrohne 100 beim Landeanflug auf dem Zentrum der Landefläche 210 zu zentrieren. Alternativ kann eine solche Zentrierung aber auch über eine Kamera an der Basisstation realisiert werden, wie weiter unten im Zusammenhang mit Figur 3 beschrieben.

Figur 3 zeigt eine schematische Aufsicht einer Basisstation 200 oder eines Teils davon nach einem weiteren Beispiel der Erfindung. Gezeigt ist hier eine Halbschale 250 eines Koffers, in den die Basisstation als leicht portable Basisstation integriert sein kann. In diese Kofferschale ist eine ebene Landefläche 210 eingebettet, welche insgesamt ähnlich wie beim Beispiel der Figur 1 ausgestaltet sein kann. Auch hier ist die Landefläche 210 aus vier Elektrodenflächen 220 zusammengesetzt, welche insbesondere vier gleichartige Winkelsegmente der übergeordneten Landefläche ausbilden. Diese vierteilte Landfläche ist dazu ausgestaltet, mit einer Flugdrohne mit vier Standfüßen ähnlich wie in der Darstellung der Figur 1 zusammenzuwirken. Insbesondere können vier Kontaktelektroden 140 einer solchen Flugdrohne 100 beim Landen mit den vier Elektrodenflächen in elektrischen Kontakt treten. Nach Herstellung dieser Verbindung kann der Akkumulator der Flugdrohne über die nur schematisch dargestellte Ladevorrichtung 230 der Basisstation aufgeladen werden. Dieser Ladevorgang kann von einer zentralen Steuervorrichtung 270 der Basisstation aus gesteuert werden und insgesamt ebenfalls autonom erfolgen. Das Flugsystem kann insgesamt energieautark sein, was im vorliegenden Beispiel durch Integration eines weiteren Akkumulators 260 in die portable Basisstation 200 realisiert ist.

Im Zentrum Z ihrer Landefläche 210 weist die Basisstation der Figur 3 eine Kamera 280 auf. Diese Kamera 280 wird von der zentralen Steuervorrichtung 270 der Basisstation angesteuert und ausgelesen. Mittels Bewegungs- und Objekterkennung kann so eine im Landeanflug befindliche Flugdrohne 100 von der Basisstation 200 autonom erkannt werden. Diese Erkennung kann in der Steuervorrichtung 270 die Aktivierung einer Landeroutine auslösen. Dabei wird das Zentrum der anfliegenden Flugdrohne innerhalb eines gewissen Toleranzbereichs über dem Zentrum Z der Basisstation zentriert. Zum Beispiel kann über die Bilderkennung das aktuelle tatsächliche Zentrum der Flugdrohne bestimmt werden und aus einer Differenz zu den x,y-Koordinaten des Zentrums der Landefläche können geeignete Fluganweisungen abgeleitet werden. Diese Zentrierung kann iterativ in mehreren solchen Schritten durchgeführt werden, bis die Drohne weitgehend über der Landefläche zentriert ist. Auch eine passende Winkelausrichtung kann über diese Bilderkennung und Ansteuerung erreicht werden, beispielsweise indem die Tragarme der Flugdrohne im Wesentlichen in Richtung der Winkelhalbierenden W der einzelnen Elektrodenflächen ausgerichtet werden.

Erst wenn diese Soll-Position und Soll-Ausrichtung erreicht ist, wird die Flugdrohne durch Absenkung in z-Richtung auf der Landefläche 210 abgesetzt. Bei einer optimalen Zentrierung und Winkelausrichtung der Flugdrohne werden die vier Federkontaktstifte in den vier Sollpositionen P auf den entsprechenden vier Feldern abgesetzt. Diese vier Sollpositionen P liegen jeweils auf den Winkelhalbierenden W des zugehörigen Feldes (wobei das Winkelsegment des jeweiligen Feldes vom Zentrum Z aus gesehen in zwei gleiche Hälften geteilt wird). Bei einer tatsächlichen autonomen Landung einer Flugdrohne auf der Landefläche kann es einerseits zu einer leichten Dezentrierung und andererseits auch zu einer leichten Verdrehung aus dieser optimalen Winkelausrichtung heraus kommen. Hierdurch wird ein Toleranzbereich T definiert, innerhalb dessen die Kontaktstifte der Flugdrohne bei der Landung auf der zugehörigen Elektrodenfläche 220 zum Stehen kommen können. Wesentlich ist, dass dieser Toleranzbereich T deutlich kleiner ist als die Fläche des jeweiligen Feldes 220, so dass trotz leichter Fehlzentrierung und/oder Fehlausrichtung ein zuverlässiger elektrischer Kontakt mit der jeweiligen Elektrodenfläche hergestellt werden kann. Diese zuverlässige Kontaktierung wird durch das Zusammenspiel von ausreichend großen Elektrodenflächen und ausreichend genauer Positionierung erreicht. Im vorliegenden Beispiel können die lateralen Abmessungen der Elektrodenflächen 220 in x- und y-Richtung beispielsweise etwa 20 cm betragen. Der Toleranzbereich kann dagegen etwa kreisförmig sein und einen Durchmesser von etwa 5 cm aufweisen. Der Toleranzbereich kann ggf. aber auch eine andere Form aufweisen und z.B. elliptisch oder auch bananenförmig sein. Wesentlich ist nur, dass er klein genug ist, damit die nahezu punktförmig aufliegenden Kontaktstifte auf den vergleichsweise großen Elektrodenflächen auch bei autonom durchgeführtem Landeanflug mit einer Bilderkennung und automatischen Steuerung zuverlässig innerhalb des Toleranzbereichs T positioniert werden können.

Durch die Verwendung von vier Federkontaktstiften und vier Elektrodenfeldern 220 wird bei der Herstellung des Auflade-Stromkreises eine gewisse Redundanz erreicht, da zur Schließung des Stromkreises prinzipiell nur zwei Kontaktstellen nötig wären. Hierdurch ist vorteilhaft eine gewisse Ausfallsicherheit gegeben. In Figur 4 ist die Polarität der jeweiligen Elektrodenflächen 220 beispielhaft mit + und - bezeichnet. Wenn diese Polarität für eine gegebene Elektrodenfläche fest eingestellt ist, dann muss die Ausrichtung der Flugdrohne bei der Landung so gewählt werden, dass ein gegebener Kontaktstift mit der Elektrodenfläche der passenden Polarität in Berührung kommt. Allerdings kann die Ladevorrichtung 230 auch so ausgestaltet sein, dass die Polarität bei einer beliebigen Ausrichtung der Drohne automatisch erkannt wird und die Polung der Elektrodenflächen dann an diese Polarität entsprechend angepasst wird.

### Bezugszeichenliste

- 1: Flugsystem
- 100: Flugdrohne
- 110: Antriebsvorrichtung (Rotoren)
- 120: Akkumulator
- 130: Standfuß (Landegestell)
- 140: Kontaktelektrode (Federkontaktstift)
- 140a: Stifthülse
- 140b: Feder
- 140c: Kolben
- 150: Drohnenkörper
- 160: Tragarm
- 170: Mikroprozessor
- 175: weiterer Mikroprozessor
- 180: Kamera
- 200: Basisstation
- 210: Landefläche
- 220: Elektrodenfläche (Feld der Landefläche)
- 230: Ladevorrichtung
- 250: Kofferschale
- 260: Akkumulator
- 270: Steuervorrichtung
- 280: Kamera
- d: laterale Abmessung
- P: Sollposition
- T: Toleranzbereich
- W: Winkelhalbierende
- x,y: horizontale Koordinaten
- z: vertikale Koordinate
- Z: Zentrum

## Patentansprüche

1. Flugdrohne (100), die dazu ausgelegt ist, auf einer Basisstation (200) zu landen und von dieser aufgeladen zu werden,
- wobei die Flugdrohne (100) eine elektrische Antriebsvorrichtung (110) und einen Akkumulator (120) zur Versorgung der Antriebsvorrichtung (110) mit elektrischer Energie aufweist,
- und wobei die Flugdrohne (100) ein Landegestell mit einer Mehrzahl von Standfüßen (130) aufweist, wobei wenigstens zwei der Standfüße (130) jeweils eine untenliegende Kontaktelektrode (140) aufweisen,
die dazu ausgelegt ist, bei der Landung auf einer Landefläche (210) der Basisstation (200) mit dort vorliegenden Elektrodenflächen (220) in elektrischen Kontakt zu treten.

2. Flugdrohne (100) nach Anspruch 1, bei welcher die Kontaktelektroden (140) als Kontaktstifte, insbesondere als Federkontaktstifte, ausgebildet sind.

3. Flugdrohne (100) nach einem der Ansprüche 1 oder 2, bei welchem alle Standfüße (130) des Landegestells untenliegende Kontaktelektroden (140) aufweisen.

4. Flugdrohne (100) nach einem der vorhergehenden Ansprüche, welche als Multicopter ausgestaltet ist.

5. Flugdrohne (100) nach einem der vorhergehenden Ansprüche, welches zur autonomen Durchführung von Flügen ausgestaltet ist, insbesondere von Flügen in Innenräumen.

6. Basisstation (200) für ein Flugsystem (1) mit einer Landefläche (210) für eine Flugdrohne (100) nach einem der vorhergehenden Ansprüche und einer Ladevorrichtung (230) zum Aufladen des Akkumulators (120) der Flugdrohne (100),
- wobei die Landefläche (210) in mehrere Felder unterteilt ist, wobei wenigstens zwei dieser Felder als elektrisch voneinander isolierte Elektrodenflächen (220) ausgestaltet sind, die dazu vorgesehen sind, bei der Landung der Flugdrohne (100) mit deren Kontaktelektroden (140) in elektrischen Kontakt zu treten, um den Akkumulator (120) aufzuladen.

7. Basisstation (200) nach Anspruch 6, bei welcher alle Felder der Landefläche (210) als Elektrodenflächen (220) ausgestaltet sind.

8. Basisstation (200) nach einem der Ansprüche 6 oder 7, bei welcher die Unterteilung der Landefläche (210) in einzelne Felder symmetrisch zum Zentrum (Z) der Landefläche (210) ausgestaltet ist.

9. Flugsystem (1), umfassend
- eine Flugdrohne (100) mit einer elektrischen Antriebsvorrichtung (110) und einem Akkumulator (120) zur Versorgung der Antriebsvorrichtung (110) mit elektrischer Energie
- und eine Basisstation (200) mit einer Landefläche (210) für die Flugdrohne (100) und einer Ladevorrichtung (230) zum Aufladen des Akkumulators (120) der Flugdrohne (100),
- wobei die Flugdrohne (100) ein Landegestell mit einer Mehrzahl von Standfüßen (130) aufweist, wobei wenigstens zwei der Standfüße eine untenliegende Kontaktelektrode (140) aufweisen
- und wobei die Landefläche (210) in mehrere Felder unterteilt ist, wobei wenigstens zwei dieser Felder als elektrisch voneinander isolierte Elektrodenflächen (220) ausgestaltet sind, die dazu vorgesehen sind, bei der Landung der Flugdrohne (100) mit deren Kontaktelektroden (140) in elektrischen Kontakt zu treten, um den Akkumulator (120) aufzuladen.

10. Flugsystem (1) nach Anspruch 9, bei welchem die Flugdrohne (100) eine Kamera (180) und eine Steuervorrichtung (170) aufweist, mit welcher die Basisstation (200) automatisiert erkannt werden kann,
und/oder bei welchem die Basisstation (200) eine Kamera (280) und eine Steuervorrichtung (270) aufweist, mit welcher die Flugdrohne (100) automatisiert erkannt werden kann,
wobei die jeweilige Steuervorrichtung (170,270) dazu ausgebildet ist, Anweisungen an die Antriebsvorrichtung (110) der Flugdrohne (100) zu übermitteln, mit denen die Flugdrohne (100) über der Basisstation (200) autonom zentriert werden kann.

11. Flugsystem (1) nach einem der Ansprüche 9 oder 10, bei welchem die Anzahl n der Kontaktelektroden (140) der Flugdrohne (100) identisch mit der Anzahl der Elektrodenflächen (220) der Basisstation (200) ist, wobei insbesondere n wenigstens 4 ist.

12. Verfahren zum elektrischen Laden des Akkumulators (120) einer Flugdrohne (100) nach Anspruch 10 mit einer Basisstation (200) nach Anspruch 11, umfassen die Schritte:
a) Anfliegen der Basisstation (200) mit der Flugdrohne (100),
b) Landen der Flugdrohne (100) auf der Landefläche (210) der Basisstation (200), wobei die Kontaktelektroden (140) der Flugdrohne (100) mit den zugeordneten Elektrodenflächen (220) in elektrischen Kontakt treten und
c) Aufladen des Akkumulators (120) der Flugdrohne (100) mit der Ladevorrichtung (230) der Basisstation (200).

13. Verfahren nach Anspruch 12, bei welchem vor oder während Schritt b) eine autonome Zentrierung der Flugdrohne (100) über dem Zentrum (Z) der Landefläche (210) erfolgt.

14. Verfahren nach Anspruch 13, bei welchem die autonome Zentrierung über eine Kamera (180,280) in der Flugdrohne (100) und/oder der Basisstation (200) und eine zugehörige Steuervorrichtung (170,270) erreicht wird.

15. Verfahren nach einem der Ansprüche 12 bis 14, bei welchem die Basisstation (200) eine zentrale Steuervorrichtung (270), insbesondere einen Prozessor, aufweist, mit welchem zusätzlich
- der Ladevorgang in Bezug auf den Ladefortschritt überwacht wird,
- der Betriebszustand der Flugdrohne (100) mittels einer Testroutine überprüft wird,
- Flugaufgaben auf die Flugdrohne (100) übertragen werden und/oder
- Daten von der Flugdrohne (100) auf die Basisstation (200) übertragen werden.
